# EUROPEAN PATENT APPLICATION

(11) **EP 2 806 609 A1**
(43) Date of publication of application: **26.11.2014**
(21) Application number: 14167031.5
(22) Date of filing: 05.05.2014
(51) Int. Cl.: H04L 27/00

(54) **Receivers and methods for detecting false lock of a carrier tracking loop**

(30) Priority: 24.05.2013 CN 201310198814; 31.03.2014 US 201414230054
(71) Applicant: O2 Micro, Inc., Santa Clara, CA 95054 (US)
(72) Inventor: Gao, Ke, 610041 Chengdu (CN); Tang, Deyu, 610041 Chengdu (CN); Zhang, Dachun, 610041 Chengdu (CN)
(74) Representative: Lippert, Stachow & Partner

(57) **Abstract**

A method for detecting a false lock of a carrier tracking loop is described. The method includes obtaining an average output of each of one or more loop discriminators in a predetermined time period when the carrier tracking loop works in a first mode; and determining whether the carrier tracking loop is falsely locked when the absolute value of the average output of any of the one or more loop discriminators is greater than a respective threshold associated with the corresponding loop discriminator. The carrier tracking loop comprises the frequency-locked loop and the phase-locked loop in the first mode. The one or more discriminator loops may include a frequency-locked discriminator loop, a phase-locked discriminator loop, or a combination thereof.

## Description

### RELATED APPLICATION

This Application claims priority to Patent Application Number 201310198814.6, filed on May 24, 2013 with State Intellectual Property Office of the P.R. China (SIPO), which is hereby incorporated by reference.

### BACKGROUND

At present time, there are four sets of satellite navigation systems in the world: BeiDou (Compass) satellite navigation system, Global Positioning System (GPS), Global Navigation Satellite System (GLONASS) satellite navigation system, and Galileo satellite navigation system developed by China, United States, Russia, and Europe, respectively. In these navigation systems, a satellite receiver captures a satellite signal and then enters a tracking loop. The tracking loop includes a carrier tracking loop and a code tracking loop.

In the carrier tracking loop, if an in-phase component I and a quadrature component Q of a satellite signal are sampled in the same data bit time period, that is, there is no data bit hopping between the component I and the component Q, the tracked carrier frequency in a frequency-locked loop discriminator of the receiver will not be fuzzy. However, in case of a high dynamic environment or large initial frequency offset condition, the frequency-locked loop may be locked in a wrong frequency, which may cause the carrier tracking loop to be falsely locked and thus reduce the accuracy of satellite positioning. Meanwhile, the phase-locked loop (PLL) is not sensitive to signal modulation, thus, the phase tracked by a phase-locked loop discriminator may be fuzzy, which may cause the carrier tracking loop to be falsely locked and reduce the accuracy of satellite positioning.

Conventionally, the following technology is adopted in order to reduce the false lock of the carrier tracking loop. At the beginning of tracking, a shorter pre-detection integration time (i.e., a wider range of traction) is used, and a frequency-locked loop with strong dynamic ability is adopted as the carrier tracking loop, to track carrier frequency and to eliminate the dynamic change of the carrier frequency. After the tracking is stable, a longer pre-detection integration time is used, and a phase-locked loop with little thermal noise error and the frequency-locked loop are adopted as the carrier tracking loop, to further reduce the carrier frequency error to a level that the phase-locked loop can track stably, and thus to track the carrier phase and positioning accurately.

This method reduces the probability of occurrence of a false lock. However, it cannot detect a false lock in real time.

Moreover, even when the carrier tracking loop is falsely locked, for example, the frequency-locked loop is locked at a wrong frequency or the phase-locked loop is locked at a wrong phase, the carrier tracking loop can continuously track, and the control parameters (i.e., Carrier-to-noise-density ratio, CNO) for determining the quality of the carrier tracking loop are still normal. Thus, the false lock can't be detected based on the control parameters (i.e., CN0).

### SUMMARY

The present disclosure describes a method for detecting a false lock of a carrier tracking loop. The method includes obtaining an average output of each of one or more loop discriminators in a predetermined time period when the carrier tracking loop works in a first mode; and determining whether the carrier tracking loop is falsely locked when the absolute value of the average output of any of the one or more loop discriminators is greater than a respective threshold associated with the corresponding loop discriminator. The carrier tracking loop comprises the frequency-locked loop and the phase-locked loop in the first mode. The one or more discriminator loops may include a frequency-locked discriminator loop, a phase-locked discriminator loop, or a combination thereof.

In yet another embodiment, the present disclosure describes a satellite receiver. The satellite receiver includes an obtaining unit and a determining unit. The obtaining unit is coupled to a carrier tracking loop, and is configured to obtain an average output of each of one or more loop discriminators in a predetermined time period when the carrier tracking loop works in a first mode. The carrier tracking loop may include a frequency-locked loop and a phase-locked loop in the first mode. The one or more loop discriminators may include a frequency-locked loop discriminator, a phase-locked loop discriminator, or a combination thereof. The determining unit is coupled to the obtaining unit, and is configured to determine whether an absolute value of the average output of any of the one or more loop discriminators is greater than a respective threshold associated with the corresponding loop discriminator. The determining unit may be further configured to determine a false lock of the carrier tracking loop when the absolute value of the average output of the frequency-locked loop discriminator is greater than a first threshold and/or the absolute value of the average output of the phase-locked loop discriminator is greater than a second threshold.

### BRIEF DESCRIPTION OF THE DRAWINGS

The disclosure will be readily understood in view of the following description when accompanied by the below figures and wherein like reference numerals represent like elements, wherein:
FIG. 1 a illustrates a method for detecting false lock of a carrier tracking loop, in accordance with one embodiment of the present teaching;
FIG. 1b depicts a graph of the average output of a frequency-locked loop discriminator in a predetermined time period when a carrier tracking loop isn't locked falsely, in accordance with one embodiment of the present teaching;
FIG. 1c depicts a graph of the average output of a phase-locked loop discriminator in a predetermined time period when a carrier tracking loop isn't locked falsely, in accordance with one embodiment of the present teaching;
FIG. 1d depicts a graph of the average output of a frequency-locked loop discriminator in a predetermined time period when a carrier tracking loop is locked falsely, in accordance with one embodiment of the present teaching;
FIG. 1e depicts a graph of the average output of a phase-locked loop discriminator in a predetermined time period when a carrier tracking loop is locked falsely, in accordance with one embodiment of the present teaching;
FIG. 2 illustrates a method for detecting false lock of a carrier tracking loop, in accordance with another embodiment of the present teaching;
FIG.3 schematically illustrates a satellite receiver, in accordance with one embodiment of the present teaching;
FIG.4 schematically illustrates a satellite receiver, in accordance with another embodiment of the present teaching.

### DETAILED DESCRIPTION

Reference will now be made in detail to the embodiments of the present teaching, examples of which are illustrated in the accompanying drawings. While the present teaching will be described in conjunction with the embodiments, it will be understood that they are not intended to limit the present teaching to these embodiments. On the contrary, the present teaching is intended to cover alternatives, modifications, and equivalents, which may be included within the spirit and scope of the present teaching as defined by the appended claims.

Furthermore, in the following detailed description of embodiments of the present teaching, numerous specific details are set forth in order to provide a thorough understanding of the present teaching. However, it will be recognized by one of ordinary skill in the art that the present teaching may be practiced without these specific details. In other instances, well-known methods, procedures, components, and circuits have not been described in detail as not to unnecessarily obscure aspects of the embodiments of the present teaching.

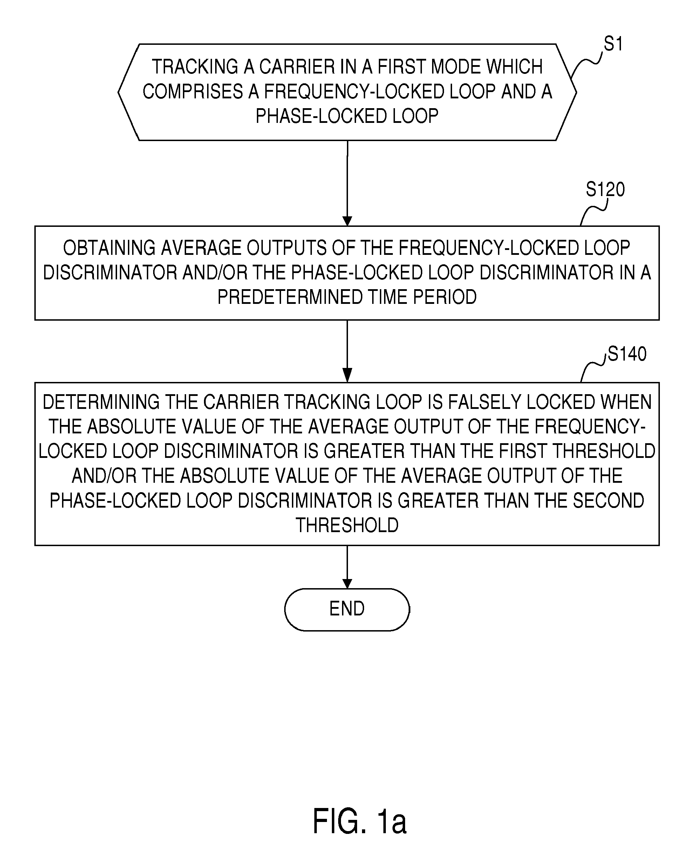

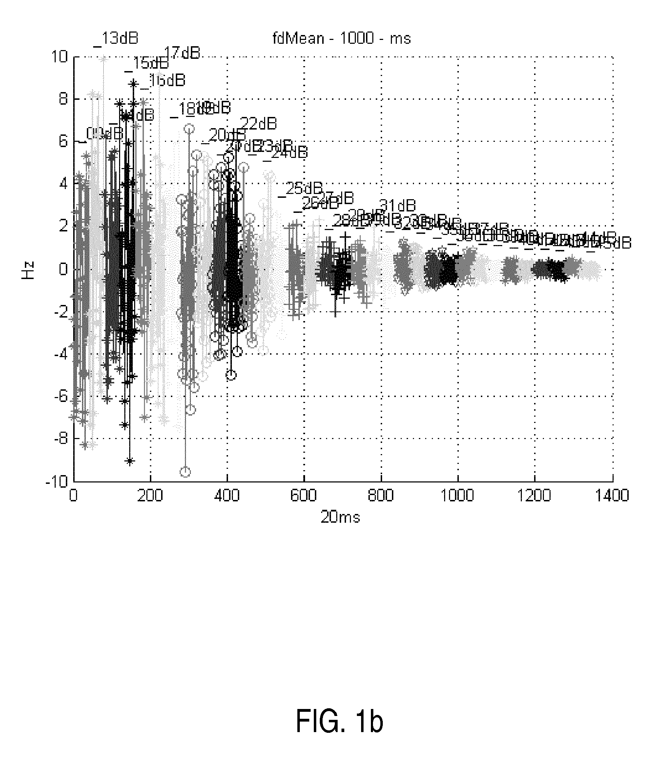

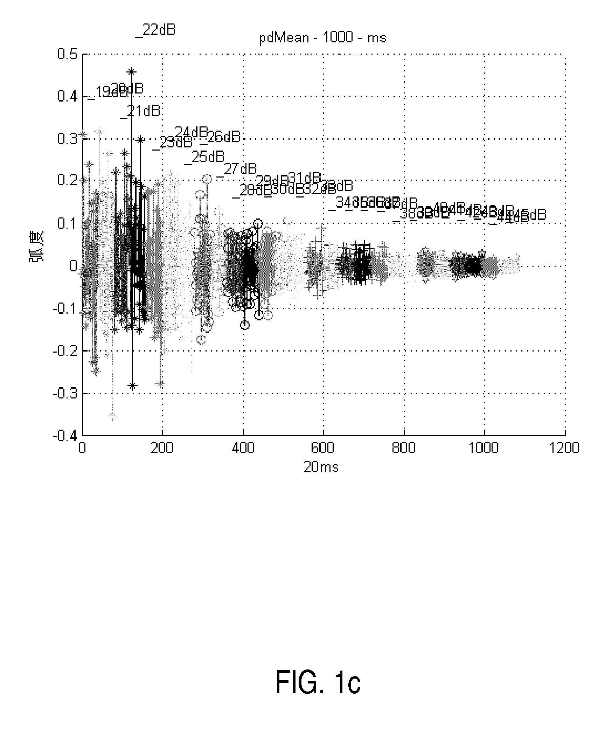

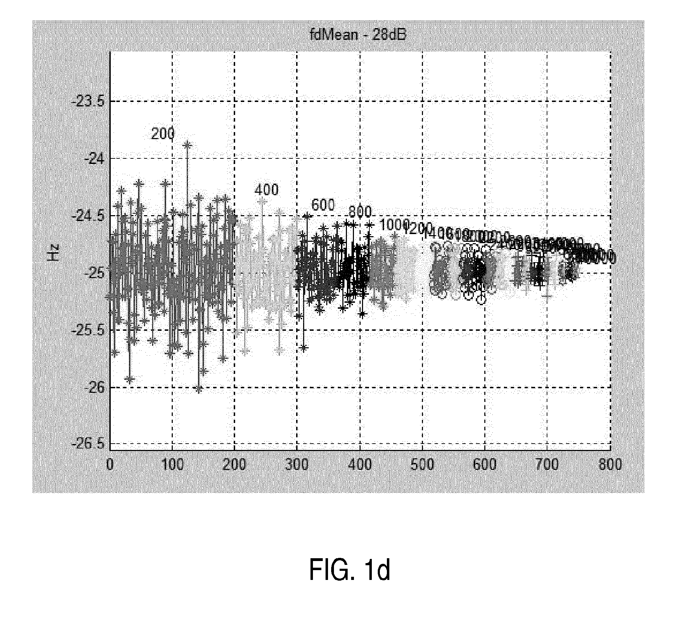

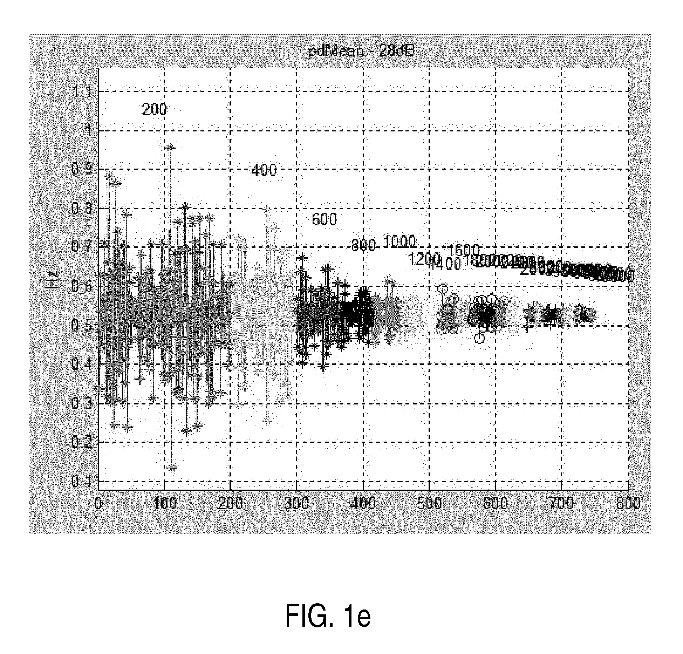

FIG. 1 a illustrates a method for detecting false lock of a carrier tracking loop, in accordance with one embodiment of the present teaching.

At step S120, average outputs of a frequency-locked loop discriminator and/or a phase-lock loop discriminator in a predetermined time period are obtained when the carrier tracking loop tracks a carrier working in a first mode (as shown in Step S1). In one embodiment, the carrier tracking loop may include a frequency-locked loop and a phase-lock loop in the first mode.

At step S140, if an absolute value of the average output of the frequency-locked loop discriminator is greater than a first threshold and/or an absolute value of the average output of the phase-locked loop discriminator is greater than a second threshold, the carrier tracking loop is determined to be falsely locked.

FIG. 1b is an experimental diagram illustrating the average output of a frequency-locked loop discriminator in a predetermined time period when a carrier tracking loop is not locked falsely, in accordance with one embodiment of the present teaching. For the embodiment illustrated in FIG. 1b, the absolute value of the average output of the frequency-locked loop discriminator of the carrier tracking loop in a predetermined time period (e.g.., 1 second) is approximately 0 hertz. For example, the absolute value of the average output is a small value (i.e., 0.01 hertz) close to 0 hertz. Combined with the above detecting method, the absolute value of the average output of the frequency-locked loop discriminator of the carrier tracking loop in a predetermined time period (e.g., 1 second) is approximately 0 hertz, which is less than the first threshold. Thus, the carrier tracking loop is determined to be not falsely locked, and the carrier tracking loop works under normal condition.

Furthermore, the dither range of the absolute value of the average output of the frequency-locked loop discriminator of the carrier tracking loop in a predetermined time period (i.e., 1 second) is decreased as a carrier to noise power spectral density ratio CNO increases, and the absolute value finally converges to 0 hertz. The carrier to noise power spectral density ratio CNO can be used to determine the quality of the carrier tracking loop. For example, when the carrier to noise power spectral density ratio CNO is greater than 26 decibel (dB), and the maximum dither range of the absolute value of the average output of the frequency-locked loop discriminator is within 2 hertz, the carrier tracking loop is determined to be tending to stable.

FIG. 1c is an experimental diagram illustrating the average output of a phase-locked loop discriminator in a predetermined time period when a carrier tracking loop is not locked falsely, in accordance with one embodiment of the present teaching. For the embodiment illustrated in FIG. 1c, the absolute value of the average output of the phase-locked loop discriminator of the carrier tracking loop in a predetermined time period (i.e., 1 second) is approximately 0 radians. For example, the absolute value of the average output is a small value (e.g., 0.01 radians) close to 0 radians. Combined with the above detecting method, the absolute value of the average output of the phase-locked loop discriminator of the carrier tracking loop in a predetermined time period (e.g., 1 second) is approximately 0 radian, which is less than the second threshold. Thus, the carrier tracking loop is determined to be not falsely locked, and the carrier tracking loop works under normal condition.

Furthermore, the dither range of the absolute value of the average output of the phase-locked loop discriminator of the carrier tracking loop in a predetermined time period (i.e., 1 second) is decreased as the carrier to noise power spectral density ratio CNO increases, and this absolute value finally converges to 0 radian. The carrier to noise power spectral density ratio CNO can be used to determine the quality of the carrier tracking loop. For example, when the carrier to noise power spectral density ratio CNO is greater than 26 decibel (dB), and the maximum dither range of the absolute value of the average output of the phase-locked loop discriminator is within 0.1 radian, the carrier tracking loop is determined to be tending to stable.

FIG. 1d is an experimental diagram illustrating the average output of a frequency-locked loop discriminator in a predetermined time period when a carrier tracking loop is locked falsely, in accordance with one embodiment of the present teaching. For the embodiment illustrated in FIG. 1d, the absolute value of the average output of the frequency-locked loop discriminator of the carrier tracking loop in a predetermined time period (i.e., 1 second) is approximately 25 hertz. For example, the absolute value of the average output is a small value (e.g., 25.01 hertz) close to 25 hertz. Combined with the above detecting method, the absolute value of the average output of the frequency-locked loop discriminator of the carrier tracking loop in a predetermined time period (e.g., 1 second) is approximately 25 hertz, which is greater than the first threshold. Thus, the carrier tracking loop is determined to be falsely locked.

Furthermore, as shown in FIG. 1d, the real signal of the carrier tracking loop is 45 dB, the frequency of the tracked carrier signal is off by 25 hertz, and the detected carrier to noise power spectral density ratio CNO is 28dB. In prior art, the carrier tracking loop is detected as working in normal state according to the situation that the carrier to noise power spectral density ratio CNO is 28dB. However, this detected result does not match the fact that frequency of the tracked carrier signal is off by 25 hertz. Thus, determining the quality of the carrier tracking loop only based on the carrier to noise power spectral density ratio CNO may result in a mistaken determination that the carrier is correctly locked. In other words, only in the case that the carrier tracking loop is not falsely locked, determining the quality of carrier tracking loop based on the carrier to noise power spectral density ratio CNO is reliable.

FIG. 1e is an experimental diagram illustrating the average output of a phase-locked loop discriminator in a predetermined time period when a carrier tracking loop is locked falsely, in accordance with one embodiment of the present teaching. For the embodiment illustrated in FIG. 1e, the absolute value of the average output of the phase-locked loop discriminator of the carrier tracking loop in a predetermined time period (i.e., 1 second) is approximately 0.55 radians. For example, the absolute value of the average output is a small value (e.g., 0.56 radians) close to 0.55 radians. Combined with the above detecting method, the absolute value of the average output of the phase-locked loop discriminator of the carrier tracking loop in a predetermined time period (i.e., 1 second) is approximately 0.55 radians, which is greater than the second threshold. Thus, the carrier tracking loop is determined to be falsely locked.

Furthermore, as shown in FIG. 1e, the real signal of the carrier tracking loop is 45 dB, the frequency of the tracked carrier signal is off by 25 hertz, and the detected carrier to noise power spectral density ratio CNO is 28dB. In the prior art, the carrier tracking loop is detected as working in normal state according to the situation that the carrier to noise power spectral density ratio CNO is 28dB. However, this detected result does not match the fact that frequency of the tracked carrier signal is off by 25 hertz. Thus, determining the quality of the carrier tracking loop only based on the carrier to noise power spectral density ratio CNO may result in a mistaken determination that the carrier is correctly locked. In other words, only in the case that the carrier tracking loop is not falsely locked, determining the quality of carrier tracking loop based on the carrier to noise power spectral density ratio CNO is reliable.

It is to be noted that FIG. 1a-FIG. 1e illustrate the average outputs of the frequency-locked loop discriminator and/or the phase-locked loop discriminator in a predetermined time period, which are used to determine whether the carrier tracking loop is falsely locked merely as examples. However, one or ordinary skill in the art will appreciate that the present disclosure should not be limited thereto, and in fact, the user is completely free to use at least one of the following conditions to determine whether the carrier tracking loop is falsely locked: condition 1, the absolute value of the average outputs of the frequency-locked loop discriminator in a predetermined time period is greater than a first threshold; condition 2, the absolute value of the average outputs of the phase-locked loop discriminator in a predetermined time period is greater than a second threshold.

In one embodiment, the first threshold may be less than 8 hertz. For example, the first threshold may be 2 hertz or 1 hertz.

In one embodiment, the second threshold may be less than 0.5 radians. For example, the second threshold may be 0.4 radians or 0.1 radians.

In one embodiment, the predetermined time period may be equal to or greater than 1 second, e.g., 2 seconds.

In present disclosure, by obtaining the average outputs of the frequency-locked loop discriminator and/or the phase-locked loop discriminator in a predetermined time period in real time, the false lock of carrier tracking loop can be accurately determined when the absolute value of the average outputs of the frequency-locked loop discriminator is greater than a first threshold and/or the absolute value of the average outputs of the phase-locked loop discriminator is greater than a second threshold. Thus, the false lock of the carrier tracking loop can be detected timely and accurately, and the false lock can be eliminated in time once the false lock is detected, which can effectively avoid the adverse effects of the false lock occurred on the carrier tracking.

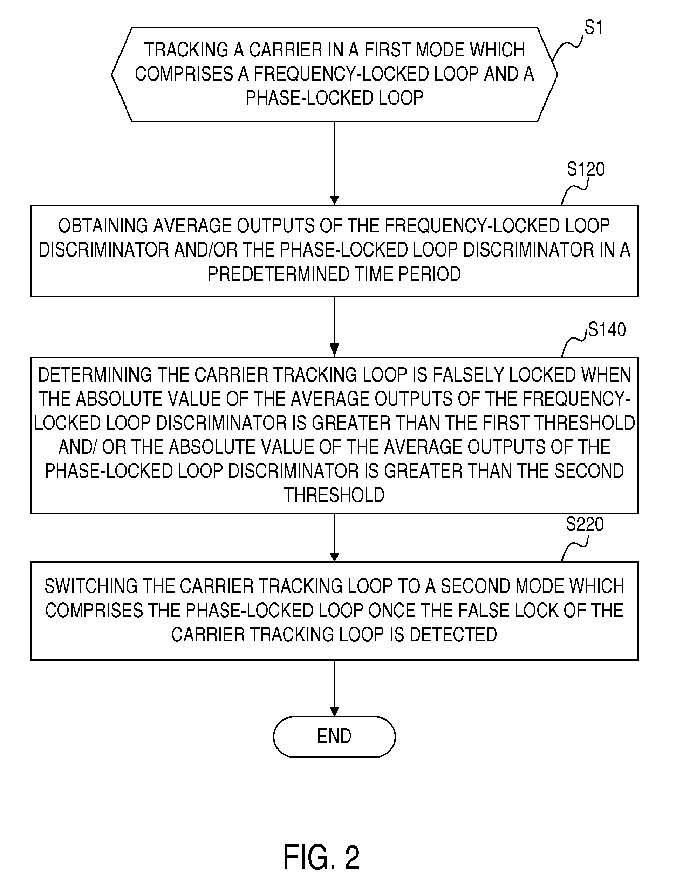

FIG. 2 is a flowchart illustrating a method for detecting false lock of a carrier tracking loop, in accordance with an embodiment of the present teaching. Elements labeled the same as in FIG. 1 a have similar functions and will not be described in detail hereafter.

Compared with FIG. 1a, FIG. 2 has a step S220 which is explained as following.

At step 220, the carrier tracking loop is switched to a second mode which only includes the phase-locked loop once the false lock of carrier tracking loop is detected.

For example, in the embodiments illustrated in FIG. 1d and FIG. 1e, the carrier tracking loop is falsely locked. For such embodiments, the carrier tracking loop is switched from the first mode including the frequency-locked loop and the phase-locked loop to the second mode including phase-locked loop, and continues to track carrier.

Compared with the method for detecting the false lock as shown in FIG. 1a, the method for detecting the false lock in FIG. 2 switches the carrier tracking loop from the first mode for the stable tracking to the second mode for the initial tracking once the false lock of carrier tracking loop is detected. This method shown in FIG. 2 may further improve the accuracy of the carrier tracking, thereby effectively improve the accuracy of satellite positioning.

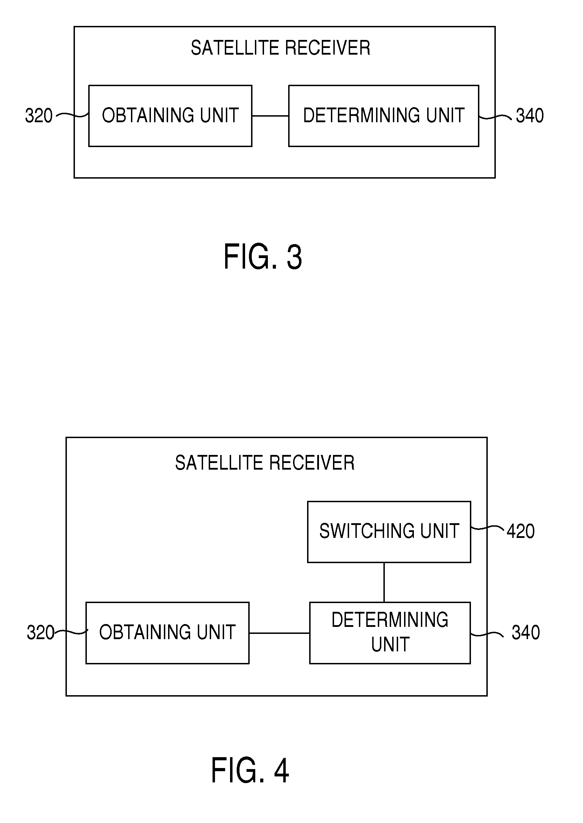

FIG. 3 is a block diagram of a satellite receiver, in accordance with one embodiment of the present teaching. As shown in FIG. 3, the satellite receiver includes an obtaining unit 320 and a determining unit 340. The obtaining unit 320 is coupled to the frequency-locked loop and/or the phase-locked loop of the carrier tracking loop, and is configured to obtain the average outputs of the frequency-locked loop discriminator and/or the phase-locked loop discriminator in a predetermined time period when the carrier tracking loop works in the first mode. In one embodiment, the carrier tracking loop includes the frequency-locked loop and the phase-locked loop in the first mode.

The determining unit 340 is coupled to the obtaining unit 320, and is configured to determine whether the absolute value of the average outputs of the frequency-locked loop discriminator is greater than a first threshold and/or determine whether the absolute value of the average outputs of the phase-locked loop discriminator is greater than a second threshold. The determining unit 340 is further configured to determine that the carrier tracking loop is falsely locked when the absolute value of the average outputs of the frequency-locked loop discriminator is greater than the first threshold and/or the absolute value of the average outputs of the phase-locked loop discriminator is greater than the second threshold.

For the above satellite receiver, the first threshold may be less than 8 hertz, e.g., 2 hertz or 1 hertz, in one embodiment.

For the above satellite receiver, the second threshold may be less than 0.5 radians, e.g., 0.4 radians or 0.1 radians, in one embodiment.

For the above satellite receiver, the predetermined time period can be equal to or greater than 1 second, e.g., 2 seconds, in one embodiment.

The obtaining unit 320 obtains the average outputs of the frequency-locked loop discriminator and/or the phase-locked loop discriminator in a predetermined time period in real time, and the determining unit 340 accurately determines the false lock of carrier tracking loop when the absolute value of the average outputs of the frequency-locked loop discriminator is greater than the first threshold and/or the absolute value of the average outputs of the phase-locked loop discriminator is greater than the second threshold. Thus, the false lock can be eliminated in time once the false lock is detected, which can effectively avoid the adverse effects of the false lock on the carrier tracking.

FIG.4 is a block diagram of a satellite receiver, in accordance with another embodiment of the present teaching. Elements labeled the same as in FIG. 3 have similar functions and will not be described in detail hereafter.

As shown in FIG. 4, the satellite receiver in FIG. 4 further includes a switching unit 420. The switching unit 420 is coupled to the determining unit 340, and is configured to switch the carrier tracking loop from the first mode to a second mode for tracking carrier. In one embodiment, the carrier tracking loop includes the phase-locked loop in the second mode. More specifically, the switching unit 420 switches from the first mode for stable tracking to the second mode for the initial tracking once a false lock of carrier tracking loop is detected. Thus, the accuracy of the carrier tracking is improved, and thereby the accuracy of satellite positioning is effectively improved.

Embodiments of the present disclosure are not only suitable for dual-mode receivers but also suitable for single-mode receivers. Embodiments of the present disclosure are not only applicable for GPS receivers and BD receivers, but also for GLONASS (Glonass) receivers, Galileo (Galileo) receiver, or any other receivers available presently or in future.

While the foregoing description and drawings represent embodiments of the present disclosure, it will be understood that various additions, modifications and substitutions may be made therein without departing from the spirit and scope of the principles of the present invention as defined in the accompanying claims. One skilled in the art will appreciate that the disclosure may be used with many modifications of form, structure, arrangement, proportions, materials, elements, and components and otherwise, used in the practice of the disclosure, which are particularly adapted to specific environments and operative requirements without departing from the principles of the present disclosure. The presently disclosed embodiments are therefore to be considered in all respects as illustrative and not restrictive, the scope of the invention being indicated by the appended claims and their legal equivalents, and not limited to the foregoing description.

## Claims

1. A method comprising:
obtaining an average output of each of one or more loop discriminators in a predetermined time period when a carrier tracking loop works in a first mode; and
determining whether the carrier tracking loop is falsely locked when an absolute value of the average output of any of the one or more loop discriminators is greater than a respective threshold associated with the corresponding loop discriminators.

2. The method of claim 1, wherein the carrier tracking loop comprises one or more of a frequency-locked loop and a phase-locked loop in the first mode.

3. The method of claim 2, further comprising:
switching the carrier tracking loop to a second mode once a false lock of the carrier tracking loop is detected, wherein the carrier tracking loop comprises the phase-locked loop in the second mode.

4. The method of claim 1, 2 or 3, wherein the one or more loop discriminators comprise a frequency-locked loop discriminator, a phase-locked loop discriminator, or a combination thereof.

5. The method of claim 4, wherein the threshold for the frequency-locked loop discriminator is less than 8 hertz.

6. The method of claim 4 or 5, wherein the threshold for the phase-locked loop discriminator is less than 0.5 radians.

7. The method of one of claims 1 to 6, wherein the predetermined time is greater than or equal to 1 second.

8. A satellite receiver, comprising:
an obtaining unit, coupled to a carrier tracking loop, and configured to obtain an average output of each of one or more loop discriminators in a predetermined time period when the carrier tracking loop works in a first mode; and
a determining unit, coupled to the obtaining unit, and configured to determine whether an absolute value of the average output of any of the one or more loop discriminators is greater than a respective threshold associated with the corresponding loop discriminator.

9. The satellite receiver of claim 8, wherein the carrier tracking loop comprises a frequency-locked loop and a phase-locked loop in the first mode.

10. The satellite receiver of claim 8 or 9, wherein the one or more loop discriminators comprise a frequency-locked loop discriminator, a phase-locked loop discriminator, or a combination thereof.

11. The satellite receiver of claim 10, wherein the determining unit is further configured to determine a false lock of the carrier tracking loop when the absolute value of the average output of the frequency-locked loop discriminator is greater than a first threshold and/or the absolute value of the average output of the phase-locked loop discriminator is greater than a second threshold.

12. The satellite receiver of claim 11, wherein the first threshold is less than 8 hertz.

13. The satellite receiver of claim 11 or 12, wherein the second threshold is less than 0.5 radians.

14. The satellite receiver of one of claims 8 to 13, wherein the predetermined time is greater than or equal to 1 second.

15. The satellite receiver of one of claims 8 to 14, further comprising:
a switching unit, coupled to the determining unit, and configured to switch the carrier tracking loop from the first mode for stable tracking to a second mode for initial tracking once a false lock of carrier tracking loop is detected, wherein the second mode comprises a phase-locking loop.
